# EUROPÄISCHE PATENTSCHRIFT

(11) **EP 1 825 739 B1**
(45) Veröffentlichungstag und Bekanntmachung des Hinweises auf die Patenterteilung: **27.08.2008**
(21) Anmeldenummer: 07003797.3
(22) Anmeldetag: 23.02.2007
(51) Int. Cl.: A01C 17/00

(54) **Verstellgetriebeanordnung insbesondere für Düngersteuer**
Variable speed transmission arrangement, in particular for fertilizer spreaders
Dispositif de transmission à vitesse variable, en particulier pour un epandeur d'engrais

(30) Priorität: 24.02.2006 DE 102006009133
(43) Veröffentlichungstag der Anmeldung: 29.08.2007
(73) Patentinhaber: Rögelberg Holding GmbH & Co. KG, 49716 Meppen (DE)
(72) Erfinder: Seggering, Manfred, 49744 Geeste-Dalüm (DE); Süelmann, Anton, 49716 Meppen (DE)
(74) Vertreter: Bünemann, Egon

(56) Entgegenhaltungen:
- EP-A- 0 125 740
- EP-A- 0 903 069
- DE-A1- 19 745 441
- GB-A- 621 947

## Beschreibung

Die Erfindung betrifft eine Verstellgetriebeanordnung nach dem Oberbegriff des Anspruchs 1 für insbesondere landwirtschaftliche Geräte, besonders bevorzugt einzusetzen für Düngerstreuer.

Bei Düngerstreuern ist die Antriebsleistung auf zwei oder mehrere Streuteller zu verteilen, von denen zumindest einer hinsichtlich seiner Drehzahl variierbar sein sollte, um beim sogenannten Ackerrandstreuen an einer Seite eine geringere Wurfweite und/oder das Ausbringen von weniger Dünger als am übrigen Düngerstreuer zu ermöglichen. In der Praxis, wie z.B. aus der DE-A-197 45 441, sind Düngerstreuer bekannt, bei denen dazu beide Streuteller von einzelnen, unabhängig voneinander steuerbaren Hydraulikantrieben angetrieben werden. Nachteilig dabei ist die große Verlustleistung hydraulischer Antriebe sowie relativ hohe Kosten der Gesamtanordnung.

Der Erfindung liegt daher die Aufgabe zugrunde, eine Verstellgetriebeanordnung zu schaffen, die kostengünstiger herstellbar und/oder betreibbar ist. Diese Aufgabe wird erfindungsgemäß durch eine Verstellgetriebeanordnung mit den Merkmalen des Anspruchs 1 gelöst.

Durch die Verwendung eines Überlagerungsgetriebes an der Abtriebsseite, deren Drehzahl veränderbar sein soll, muß nicht mehr die Leistung über einen Hydraulikantrieb eingebracht werden, sondern es kann mechanische Abtriebsleistung mit günstigerem Wirkungsgrad genutzt werden, die nur an der Abtriebsseite, deren Drehzahl veränderbar sein soll, von einem Drehmomenterzeuger zu beeinflussen ist.

Dabei muß auch nicht die gesamte Abtriebsleistung vom Drehmomenterzeuger eingebracht werden, sondern es wird durch das Überlagerungsgetriebe stets auch die über die Zwischenwelle vom Hauptleistungseingang eingebrachte mechanische Leistung genutzt.

Bei einer Getriebeanordnung mit nur einem Verstellgetriebe kann auf der anderen Abtriebsseite der Hydraulikmotor einschließlich seiner für den Betrieb notwendigen Versorgungsaggregate entfallen. Insgesamt ist die erfindungsgemäße Verstellgetriebeanordnung daher sowohl in der Herstellung als auch im Betrieb erheblich kostengünstiger als solche des Standes der Technik.

Weitere Vorteile und Einzelheiten ergeben sich aus den Unteransprüchen und den Ausführungsbeispielen, die im folgenden beschrieben werden; es zeigen:
- Fig. 1: im Teilschnitt eine mögliche Bauform einer Verstellgetriebeanordnung und
- Fig. 2 bis 6: schematische Funktionsskizzen unterschiedlicher Steuervarianten für die Verstellgetriebeanordnung gemäß Fig. 1.

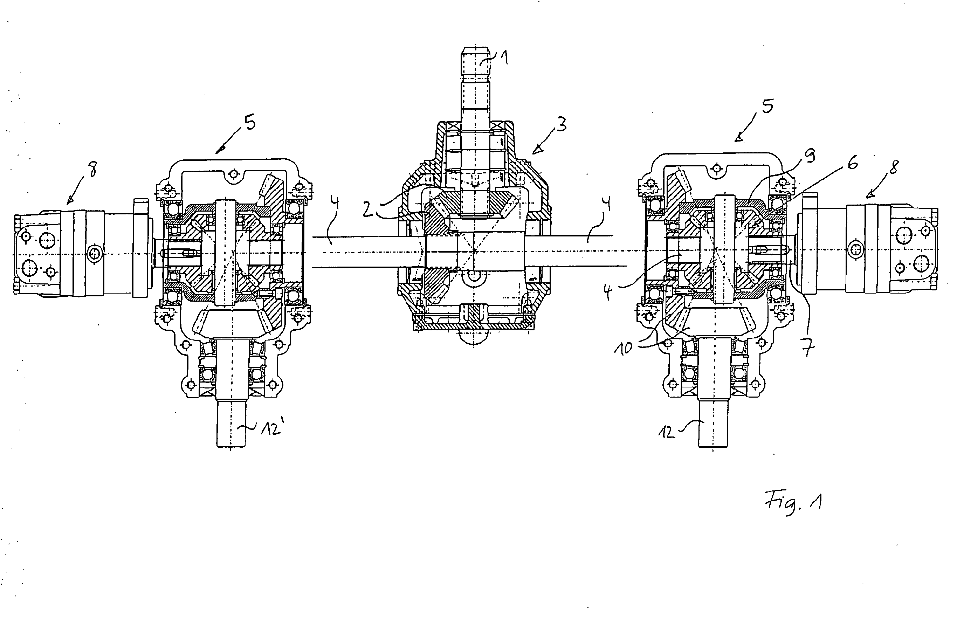

Wie in Fig. 1 dargestellt, wird auf eine Antriebswelle 1 vorzugsweise von einem mechanischen Antrieb eine Antriebsleistung aufgebracht, die über ein eine Kegelradstufe 2 enthaltendes Verteilergetriebe 3 auf eine Zwischenwelle 4 übertragen wird, die sich bei der dargestellten Ausführungsform zu beiden Seiten aus dem Verteilergetriebe herauserstreckt. Die Zwischenwelle 4 mündet in einem Verstellgetriebe 5, wo sie ein Überlagerungsgetriebe 6 einseitig antreibt. Das Überlagerungsgetriebe 6 wird bei der dargestellten Ausführungsform durch ein Differentialgetriebe gebildet. Eine Ausführung als Planetengetriebe ist jedoch ebenfalls möglich. Auch ist eine Anordnung des Überlagerungsgetriebes im Verteilergetriebe 3 vorstellbar. In die andere Seite des Differentialgetriebes 6 greift über eine Welle 7 ein Drehmomenterzeuger 8 ein, der später genauer beschrieben wird. Aus den Eingangsdrehzahlen der Zwischenwelle 4 und der Welle 7 resultiert eine Drehung des Differentialkorbs 9, die über einen Kegelradsatz 10 auf eine Abtriebwelle 12 übertragen wird. Die Abtriebswelle 12 kann beispielsweise einen erst in den nachfolgenden Figuren schematisch dargestellten Streuteller 13 eines Düngerstreuers drehen.

Über den Drehmomenterzeuger 8 ist die Abtriebsdrehzahl der Abtriebswelle 12 stufenlos verstellbar. Bei der in Fig. 1 dargestellten Ausführungsform ist auch an der linken Seite der Zwischenwelle 4 ein Verstellgetriebe 5 mit Drehmomenterzeuger 8 angeordnet. Da jedoch in der Regel nur an einer Seite eine Drehzahlvariierung notwendig ist, wird üblicherweise entgegen der Darstellung in Fig. 1 auf einer Seite nur ein normales Winkelgetriebe vorzusehen sein, das lediglich ggf. eine Drehzahlübersetzung in die an der Abtriebswelle 12' gewünschte konstante Drehzahl beinhaltet.

Die Variierung der Drehzahl der Abtriebswelle 12 über den Drehmomenterzeuger 8 geschieht folgendermaßen: Die Eingangsdrehzahl der Zwischenwelle 4 wird bei stehendem Drehmomenterzeuger 8, d.h. sich nicht drehender Welle 7, über das Differentialgetriebe 6 halbiert, so daß die Abtriebswelle 12 vorbehaltlich einer weiteren Übersetzung mit halber Zwischenwellendrehzahl dreht. Wird hingegen die Welle 7 frei drehengelassen, ohne daß ihr der Drehmomenterzeuger 8 eine Bremswirkung entgegensetzt, so hebt das Differentialgetriebe 6 die Drehung der Zwischenwelle 4 und die Drehung der Welle 7 gegeneinander auf, so daß der Differentialkorb 9 steht und die Abtriebswelle 12 nicht dreht. Sofern als dritte Extremposition sowohl die Zwischenwelle 4 als auch die Welle 7 mit gleicher Drehzahl und gleichem Drehsinn angetrieben werden, so läuft auch der Differentialkorb 9 mit gleicher Drehzahl um und überträgt diese - wiederum vorbehaltlich weiterer Übersetzungen - auf die Abtriebswelle 12.

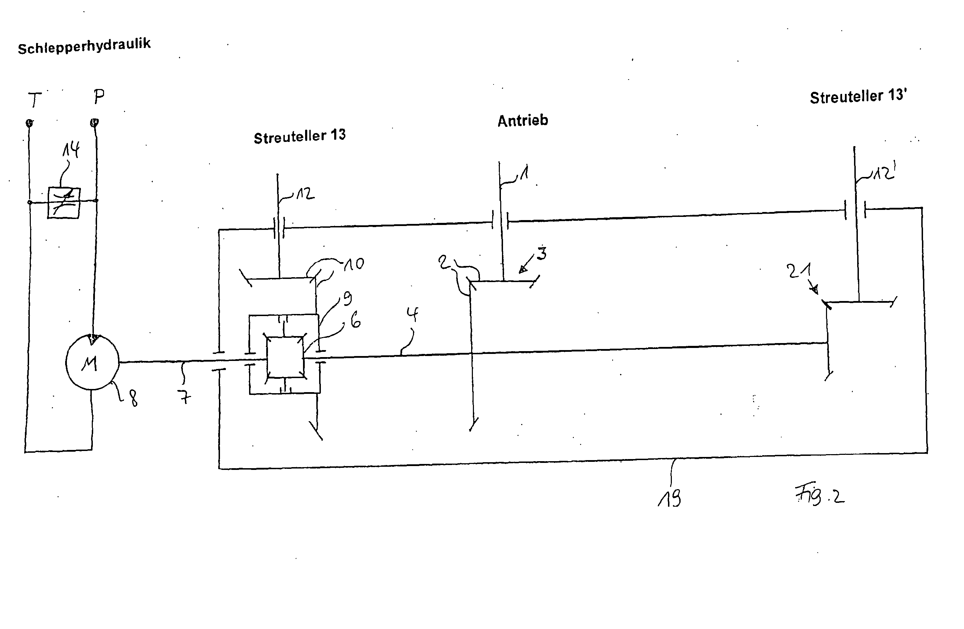

Die bevorzugten erfindungsgemäßen Einsatzmöglichkeiten der Verstellgetriebeanordnung mit Drehmomenterzeuger 8 werden in den nachfolgenden Figuren 2 bis 6 näher erläutert.

Fig. 2 zeigt eine Anordnung, bei der der Drehmomenterzeuger 8 ein Hydraulikmotor ist und vorzugsweise von einer Schlepperhydraulik angetrieben wird. Über eine Drossel 14 wird hierbei die Motorleistung geregelt. Im Normalbetrieb läuft der Hydraulikmotor 8 mit voller Leistung, so daß beide Streuteller 13 und 13' mit gleicher Umdrehungszahl angetrieben werden. Um beim Grenzstreuern die Drehzahl des Streutellers 13 zu senken, wird über die Drossel 14 die Drehzahl des Hydraulikmotors 8 abgesenkt. Diese Ausführungsform zeichnet sich durch eine einfache Verschaltung aus, jedoch wird im Normalbetrieb, d.h. in ca. 90 Prozent aller Fälle, der Hydraulikmotor 8 mit voller Leistung benötigt, der gegenüber dem mechanischen Antrieb der Antriebswelle 1 einen deutlich geringeren Wirkungsgrad hat. Außerdem ist bei dieser Ausführungsform ein externer, sehr leistungsfähiger Hydraulikanschluß notwenig.

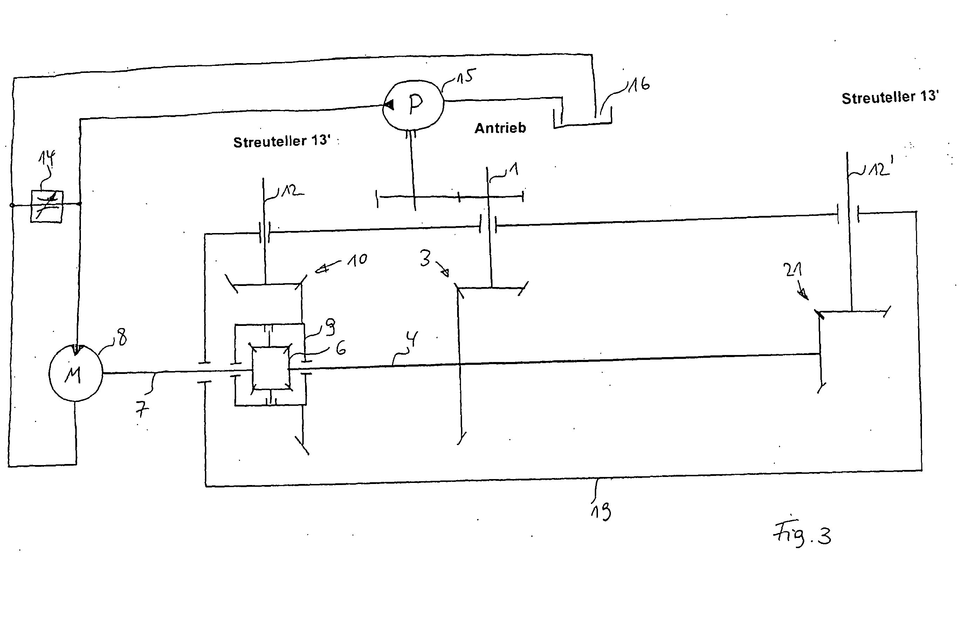

In Fig. 3 wird eine ähnliche Ausführungsform beschrieben, bei der jedoch kein externer Hydraulikantrieb notwendig ist, da der Hydraulikmotor 8 von einer Pumpe 15 angetrieben wird, die wiederum von einem mechanischen Antrieb der Verstellgetriebeanordnung angetrieben ist. Das Hydrauliköl kann aus einem Ölvorrat 16 stammen.

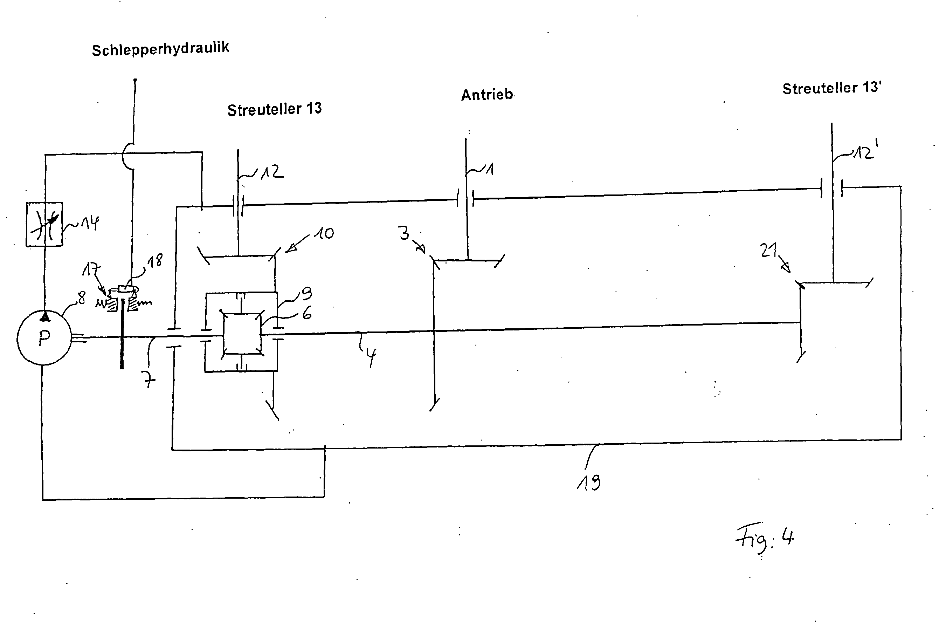

Bei der Ausführungsform der Fig. 4 ist die Wirkungsweise des Drehmomenterzeugers 8 umgekehrt, der in diesem Fall nicht als Motor, sondern als Pumpe eingesetzt wird. Dabei wird im Normalbetriebsfall (nicht Ackerrandstreuen) die Welle 7 über eine vorgespannte Bremse 17 festgehalten. Von der externen Schlepperhydraulik kann über einen Steuerzylinder 18 die Bremse gelöst werden. Sodann ist über die Drossel 14 regelbar, wie viel der Antriebsdrehleistung der über die Zwischenwelle 4 in das Differentialgetriebe 6 eingebrachten Leistung für eine Drehung der Welle 7 und damit einen Antrieb der Pumpe 8 zugelassen wird, die Öl aus dem Ölvorrat des Getriebegehäuses 19 umpumpt. Der entsprechende Leistungsanteil wird dabei vernichtet bzw. in Wärme umgewandelt, sofern er nicht anderweitig genutzt wird. Damit wird über die Drossel 14 gleichzeitig die Drehzahl des Differentialkorbs 9 und, vorbehaltlich weiterer Übersetzungen, die Drehzahl der Abtriebswelle 12 geregelt. In allen Ausführungsvarianten kann das Getriebegehäuse 19 als Monoblocksystem, d.h. als ein Gehäuse für Verteilergetriebe 3, Verstellgetriebe 5 und eventuelle weitere Winkelgetriebe 21 ausgebildet sein. Insbesondere in dieser und in der nachfolgenden Ausführungsform kann das Gehäuse dabei nicht nur als Ölreservoir, sondern auch zur Kühlung durch die zur Verfügung stehende große Oberfläche dienen.

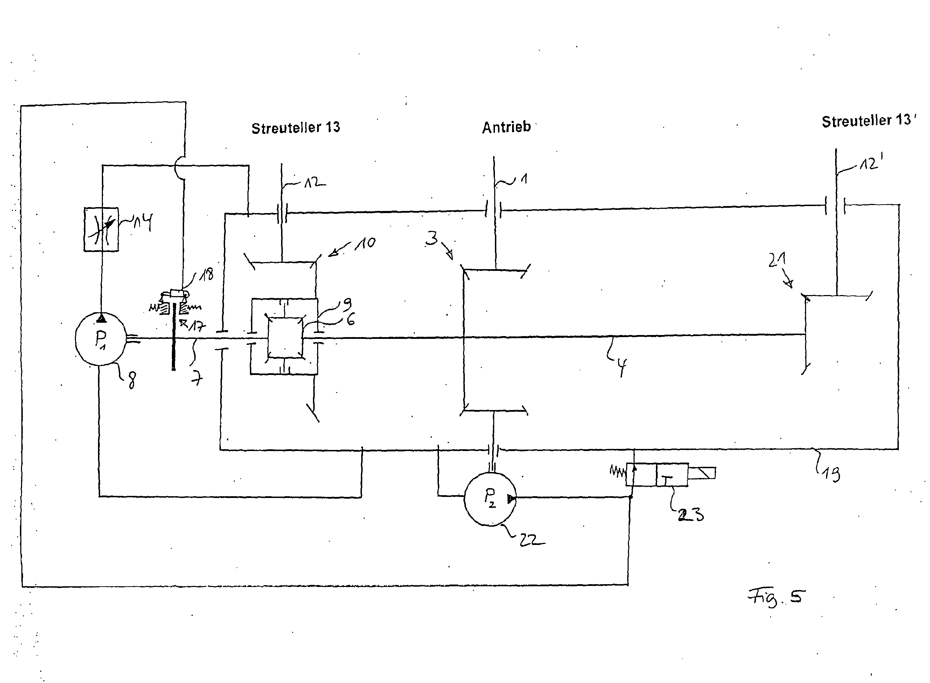

In der nachfolgenden Ausführungsform gemäß Fig. 5 ist die Steuerung des Drehmomenterzeugers wiederum völlig unabhängig von einer externen Hydraulik. Dies wird erreicht, indem eine zweite Pumpe 22 vorgesehen ist, die über ein Ventil 23 Öl entweder im als Reservoir dienenden Getriebegehäuse 19 umpumpt oder den Steuerzylinder 18 druckbeaufschlagt, so daß wiederum die Bremse 17 gelöst wird. Die weitere Funktion ist dann ähnlich der Ausführungsform der Fig. 4, wobei wieder die Drossel 14 die Drehzahlregelung des als Pumpe arbeitenden Drehmomenterzeugers 8 übernimmt. Diese Ausführungsform ist vorteilhaft, da sie völlig unabhängig von einer externen Hydraulik ist und zudem im Normalbetrieb, d.h. in ca. 90 Prozent der Fälle, rein mechanisch mit entsprechend hohem Wirkungsgrad arbeitet.

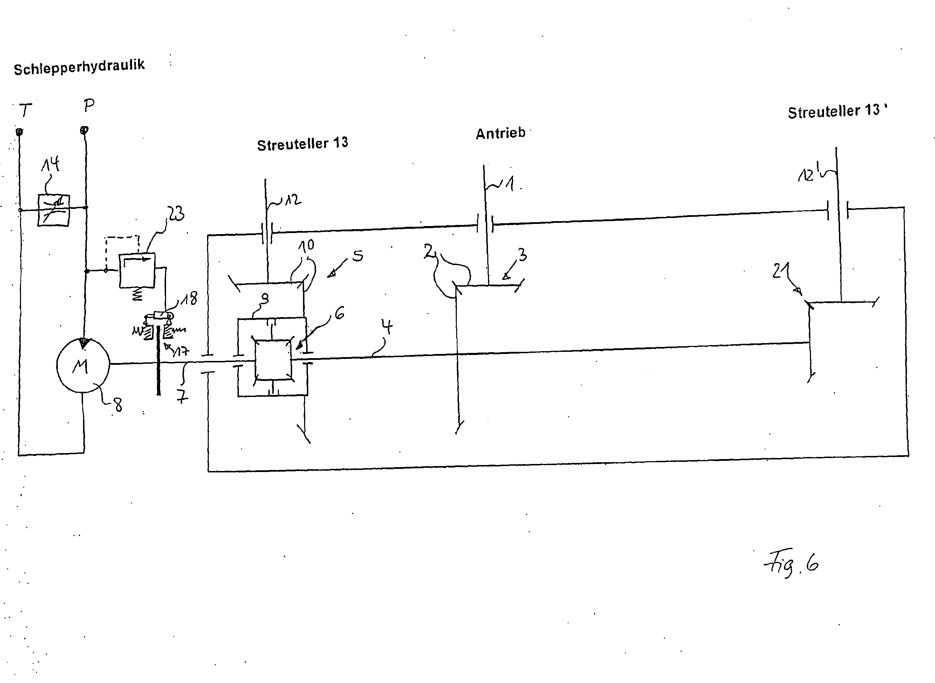

Eine letzte Ausführungsform ist in Fig. 6 dargestellt. Die Erfindung ist jedoch nicht auf die lediglich beispielhaft dargestellten Ausführungsformen beschränkt. In Fig. 6 ist wiederum ein Anschluß an eine externe Hydraulik, insbesondere Schlepperhydraulik, vorhanden. Ein Ventil 23 steuert wiederum die Belüftung bzw. das Lösen der Bremse 17 über einen Steuerzylinder 18. Bei dieser Ausführungsform arbeitet der Drehmomenterzeuger 8, dessen Drehzahl bei gelöster Bremse 17 über die Drossel 14 regelbar ist, als Motor. Im Normalbetrieb hält die Bremse 17 die Welle 7 fest. Lediglich beim Grenzstreuen wird über das Ventil 23 die Bremse 17 gelöst und der Drehmomenterzeuger 8 über die Drossel 14 geregelt.

Insgesamt kann je nach Ausführungsform eine Unabhängigkeit von einer externen Hydraulik erreicht werden oder eine ohnehin vorhandene Hydraulik beispielsweise eines Schleppers genutzt werden. Das Überlagerungsgetriebe 6 mit einem mechanischen Teil und einem hydraulischen Teil kann entweder hydraulisch unterstützt werden, wenn der Drehmomenterzeuger 8 als Motor betrieben wird oder hydraulisch abgebremst werden, wenn der Drehmomenterzeuger 8 als Pumpe arbeitet. Ist der Drehmomenterzeuger 8 ein Motor, so wird in die Abtriebswelle 12 im Normalbetrieb 50 Prozent der Leistung über die Hydraulik und 50 Prozent über die Mechanik eingespeist. Gegenüber einem rein hydraulischen Antrieb ist der Gesamtwirkungsgrad dabei trotz dem gegenüber der Mechanik verringerten Wirkungsgrad der Hydraulik immer noch höher. Wird der Drehmomenterzeuger 8 jedoch wie bevorzugt als Pumpe eingesetzt, so arbeitet der Düngestreuer in ca. 90 Prozent der Anwendungsfälle, d.h. im Normalbetrieb, mit hohem, rein mechanischem Wirkungsgrad. Nur für den Anwendungsfall des Grenzstreuens, d.h. in ca. 10 Prozent der Fälle, wird der schlechtere hydraulische Wirkungsgrad bei der Pumpe benötigt.

In allen Fällen wird ein stufenloses, lastschaltbares Überlagerungsgetriebe erreicht. Auch wenn die Anwendungsfälle der Fig. 2 bis 6 einen hydraulischen Betrieb mit Drehmomenterzeuger 8 voraussetzen, ist die Anwendung jedoch nicht auf einen hydraulischen Betrieb beschränkt. Der Drehmomenterzeuger 8 kann auch ein Elektromotor bzw. ein elektrischer Generator sein, dessen eingespeiste Leistung wieder zu anderen Antriebszwecken herangezogen werden kann. Auch ein mechanischer Drehmomenterzeuger ist denkbar.

Es ist selbstverständlich, daß die Anwendung der erfindungsgemäßen Verstellgetriebeanordnung nicht auf landwirtschaftliche Geräte, insbesondere Düngerstreuer beschränkt ist. Auch Anwendungen z.B. in der Industrie und im Baumaschinenbereich sind möglich.

## Patentansprüche

1. Verstellgetriebeanordnung für insbesondere landwirtschaftliche Geräte mit zumindest zwei Abtriebswellen (12), die unabhängig gesteuert von zumindest einem Leistungseingang sowohl mit übereinstimmenden als auch mit abweichenden Geschwindigkeiten antreibbar sind, **gekennzeichnet durch** eine Antriebswelle (1), von der aus die Antriebsleistung über ein Verteilergetriebe (3) auf Zwischenwellen (4) übertragen wird, von denen zumindest eine zu einem Verstellgetriebe (5) führt, wo sie ein Überlagerungsgetriebe (6) einseitig antreibt, das andererseits an einen Drehmomenterzeuger (8) angebunden ist und die aus der Überlagerung generierte Drehbewegung auf eine der Abtriebswellen (12) überträgt.

2. Verstellgetriebeanordnung nach Anspruch 1, **dadurch gekennzeichnet, dass** das Überlagerungsgetriebe (6) ein Differentialgetriebe ist.

3. Verstellgetriebeanordnung nach einem der vorhergehenden Ansprüche, **dadurch gekennzeichnet, dass** der Drehmomenterzeuger (8) ein Motor (M) oder eine Pumpe (P) ist.

4. Verstellgetriebeanordnung nach einem der vorhergehenden Ansprüche, **dadurch gekennzeichnet, dass** die Leistung des Drehmomenterzeugers (8) über eine Drossel (14) oder einen Stromregler steuerbar ist.

5. Verstellgetriebeanordnung nach einem der vorhergehenden Ansprüche, **dadurch gekennzeichnet, dass** der Drehmomenterzeuger (8) von demselben Leistungserzeuger angetrieben wird, der auch die Antriebswelle (1) antreibt.

6. Verstellgetriebeanordnung nach einem der vorhergehenden Ansprüche, **dadurch gekennzeichnet, dass** der Drehmomenterzeuger (8) ein Hydraulikmotor ist.

7. Verstellgetriebeanordnung nach Anspruch 6, **dadurch gekennzeichnet, dass** der Hydraulikmotor von einer Pumpe angetrieben wird.

8. Verstellgetriebeanordnung nach Anspruch 6 oder 7, **dadurch gekennzeichnet, dass** die Hydraulikflüssigkeit aus einem Flüssigkeitsvorrat (16) stammt, der durch das Getriebegehäuse (19) gebildet wird.

9. Verstellgetriebeanordnung nach einem der vorhergehenden Ansprüche, **dadurch gekennzeichnet, dass** zwischen dem Drehmomenterzeuger (8) und dem Überlagerungsgetriebe (6) eine Bremse (17) einwirkt.

10. Verstellgetriebeanordnung nach Anspruch 9, **dadurch gekennzeichnet, dass** die Bremse (17) vorgespannt und über Steuerungselement (18) lösbar ist.

11. Verstellgetriebeanordnung nach Anspruch10, **dadurch gekennzeichnet, dass** das Steuerungselement (18) über ein Steuerventil (23) betätigbar ist.

12. Verstellgetriebeanordnung nach Anspruch 10 oder 11, **dadurch gekennzeichnet, dass** das Steuerungselement (18) über eine Steuerpumpe (22) mit dem demselben Leistungserzeuger verbunden ist, der auch die Antriebswelle (1) antreibt.

## Claims

1. Drive axle having a travel motor (2) situated in a drive-axle housing (1), having a hollow shaft (9) driven by the drive motor (2), having a braking arrangement (29) and having differential gearing (24) from which drive-shafts (22) run to respective ends of the drive axle, the hollow shaft (9) and the housing (18) of the differential gearing being supported from the drive-axle housing (1), **characterised in that** the differential gearing (24) is in the form of self-locking differential gearing (24) and the braking arrangement (29) is designed to act directly on the housing (18) of the differential gearing.

2. Drive axle according to claim 1, **characterised in that** the braking arrangement (29) is in the form of a disc brake.

3. Drive axle according to either of claims 1 and 2, **characterised in that,** to allow an even applied pressure to be generated, the braking arrangement (29) has a braking lever (33) having a hemispherical contacting surface (34).

4. Drive axle according to claim 3, **characterised in that** the braking lever (33) is of single-armed form.

5. Drive axle according to one of claims 1 to 4, **characterised in that** at one end the hollow shaft (9) is mounted by means of a bearing (11) and at the other end a further bearing is dispensed with and the hollow shaft (9) is supported indirectly on the housing (1) of the drive axle via a set of reduction gearing (12).

6. Drive axle according to claim 5, **characterised in that** the hollow shaft (9) drives the differential gearing (24) via the set of reduction gearing (12).

7. Drive axle according to either of claims 5 and 6, **characterised in that** the set of reduction gearing (12) is in the form of planetary gearing (12).

8. Drive axle according to claim 7, **characterised in that** the sun-wheel of the planetary gearing (12) is part of the hollow shaft (9).

9. Drive axle according to either of claims 7 and 8, **characterised in that** the planet-gear carriers (17) of the planetary gearbox (12) are part of the housing (18) of the differential gearing.

10. Drive axle according to claim 9, **characterised in that** the differential gearing (24) is directly supported by a fixed bearing (53) on only one side.

11. Drive axle according to one of claims 5 to 10, **characterised in that** the fixed bearing (11) is arranged in a wall (8) of the drive-axle housing (1) and is lubricated from the oil supply of an adjacent set of reduction gearing (23).

12. Drive axle according to claim 11, **characterised in that** the wall (8) is a boundary of a drive-motor region (6) which is sealed off.

13. Drive axle according to one of claims 1 to 12, **characterised in that** sets of axle-end reduction gearing (23) are arranged at the ends of the axle.

14. Drive axle according to claim 13, **characterised in that** the sets of axle-end reduction gearing (23) are in the form of planetary gearing (23).

15. Drive axle according to one of either of claims 13 and 14, **characterised in that** the drive-axle housing (1) has two terminal bell-housings (44) which are detachably fastened in place and in which the sets of axle-end reduction gearing (23) are arranged.

16. Drive axle according to one of claims 1 to 15, **characterised by** an anti-clogging seal (43) to cover a gap situated between a wheel mounting (44) and a wheel flange (26).

17. Drive axle according to claim 16, **characterised in that** the anti-clogging seal (43) is substantially L-shaped in cross-section and is arranged on the wheel mounting (44) to be solid in rotation therewith.

18. Floor-travelling transporting vehicle **characterised by** a drive axle according to one of claims 1 to 17.

## Revendications

1. Dispositif de transmission à vitesse variable notamment pour des machines agricoles comportant au moins deux arbres de sortie (12) commandés indépendamment à partir d'au moins une entrée de puissance et susceptible d'être entraînés à des vitesses concordantes ou des vitesses différentes,
**caractérisé en ce qu'**
un arbre moteur (1) qui transmet la puissance motrice par l'intermédiaire d'une transmission distributrice (3) à des arbres intermédiaires (4), dont au moins l'un est relié à une transmission à vitesse variable (5), pour entraîner un côté d'une transmission de combinaison de vitesse (6) dont l'autre côté est relié à un générateur de couple (8) pour transmettre le mouvement de rotation résultant de la combinaison, à l'un des arbres de sortie (12).

2. Dispositif de transmission à vitesse variable selon la revendication 1,
**caractérisé en ce que**
la transmission de combinaison de vitesse (6) est un différentiel.

3. Dispositif de transmission à vitesse variable selon l'une des revendications précédentes,
**caractérisé en ce que**
le générateur de couple (8) est un moteur (M) ou une pompe (P).

4. Dispositif de transmission à vitesse variable selon l'une des revendications précédentes,
**caractérisé en ce que**
la puissance du générateur de couple (8) est commandée par l'intermédiaire d'un organe d'étranglement (14) ou d'un régulateur de courant.

5. Dispositif de transmission à vitesse variable selon l'une des revendications précédentes,
**caractérisé en ce que**
le générateur de couple (8) est entraîné par le même générateur de puissance que celui qui entraîne l'arbre moteur (1).

6. Dispositif de transmission à vitesse variable selon l'une des revendications précédentes,
**caractérisé en ce que**
le générateur de couple (8) est un moteur hydraulique.

7. Dispositif de transmission à vitesse variable selon la revendication 6,
**caractérisé en ce que**
le moteur hydraulique est entraîné par une pompe.

8. Dispositif de transmission à vitesse variable selon les revendications 6 ou 7,
**caractérisé en ce que**
le liquide hydraulique est fourni par une réserve de liquide (16) constituée par le carter de transmission (19).

9. Dispositif de transmission à vitesse variable selon l'une des revendications précédentes,
**caractérisé par**
un frein (17) agissant entre le générateur de couple (8) et la transmission de combinaison de vitesse (6).

10. Dispositif de transmission à vitesse variable selon la revendication 9,
**caractérisé en ce que**
le frein (17) est précontraint et peut être libéré par l'intermédiaire d'un élément de commande (18).

11. Dispositif de transmission à vitesse variable selon la revendication 10,
**caractérisé en ce que**
l'élément de commande (18) est actionné par l'intermédiaire d'une soupape de commande (23).

12. Dispositif de transmission à vitesse variable selon la revendication 10 ou 11,
**caractérisé en ce que**
l'élément de commande (18) est relié par une pompe de commande (22) du même générateur de puissance que celui qui entraîne également l'arbre d'entraînement (1).
